# EUROPEAN PATENT SPECIFICATION

(11) **EP 0 538 328 B1**
(45) Date of publication and mention of the grant of the patent: **05.10.1994**
(21) Application number: 91912721.7
(22) Date of filing: 01.07.1991
(51) Int. Cl.: A01M 23/00

(54) **ELECTROMECHANICAL DEVICE FOR THE CONTINUOUS TRAPPING OF PESTS**
ELEKTROMECHANISCHE GERÄTE DIE TIERE FORTLAUFEND EINFANGEN
DISPOSITIF ELECTROMECANIQUE DE CAPTURE CONTINUE D'ANIMAUX NUISIBLES

(30) Priority: 06.07.1990 IT 4812590
(43) Date of publication of application: 28.04.1993
(73) Proprietor: OLIVIER, Linda, 00060 S. Maria di Galeria (IT); CERULLO, Giorgio, I-00060 S. Maria di Galeria (IT); CERULLO, Andrea, I-00060 S. Maria di Galeria (IT); CERULLO, Mariano, I-00060 S. Maria di Galeria (IT)
(72) Inventor: CERULLO, Mariano, I-00060 S. Maria di Galeria (IT)
(74) Representative: Sneider, Massimo
(86) International application number: PCT/IT91/00053
(87) International publication number: WO 92/00671

(56) References cited:
- DE-A- 682 273
- GB-A- 2 152 350
- US-A- 1 131 306
- US-A- 1 244 069
- US-A- 2 110 678
- US-A- 2 221 406

## Description

The serious damage caused by rats and mice and the increasing need to provide for their capture and destruction are widely felt problems.

Given that it is hardly ever possible to destroy such vermin with chemical means, due to the serious risks said means entail for both man and domestic animals and for the environment also, it is necessary to make use of special devices to trap the animals and to subsequently destroy them.

Said devices, commonly known as mouse-traps, are based on a bait which, when touched by the animal in question, triggers a trapping mechanism.

Patent DE-C-682 273 describes a trap consisting of a tank filled with water in which the trapped animal is drowned, topped by two trapping chambers, with an S-shaped cross-section, which rotate together around a horizontal axis and the floors of which swing with the weight of the trapped animal. Due to the rotation of the chamber the animal is discharged into the water-filled tank and is kept underwater by means of floating arms. Obviously, this trap does not take into account the spreading of the noises made and the smells exuded by the trapped animal and which function as warning signals for the other animals.

Patent GB-A-2 152 350 provides for a trap, only for mice and not rats, consisting of two adjacent compartments, with a partition which slides in front of the occupied compartment, thus leaving the entrance to the unoccupied compartment open. The floor of each of the trapping compartments rotates under the weight of the trapped animal, causing it to fall into an underlying container filled with water in which the animal then drowns. This trap, however, does not allow continuous, but only intermittent, use and does not prevent the very strong smells exuded by these animals when they feel they are in danger from spreading throughout the device, thus keeping the other animals away and rendering the trap practically useless.

Yet another patent, US-A-2 221 406, provides for a trap consisting of compartments for the bait and for another substance giving off an interesting smell for the animal to be trapped. According to this patent also, the floor of the container rotates under the weight of the animal which has inadvertantly entered the device in order to bite the bait, thus falling into the death chamber through an underlying intermediate chamber. This device, like all the previous ones, is also devoid of any means for preventing the spreading of the noises and the smells made by the animal. The aim of this invention is to allow the continuous trapping of noxious animals, such as rats and mice in particular, but not exclusively as claimed in claim 1.

A characteristic feature of this system is that the trappings occur in rapid succession, because the device automatically returns to the initial position in a few tenths of a second, with the possibility of hundreds of consecutive trappings. Speed is a very important element in this case because mice and rats have exceptional reaction capacities.

This long tested device has proved to be exceptionally effective in the execution of its aim, also in heavily infested areas in which, following its installation, the amount of rats and mice has been drastically reduced or they have disappeared altogether.

In the light of these results we have good reasons to believe that this device, suitably used, may become a concrete solution to the proliferation of mice and rats, which has become a considerable problem in both cities and the countryside.

It is the result of several decades of field research work and of ethological studies on these species of vermin, carried out with great skill in the adequate environments.

The main feature of this invention, which is fundamental for ensuring the continuous trapping of the animals, consists in the air-tight sealing of the container. Said air-tight sealing prevents the trapped animals from spreading their warning signal smells to the other animals.

The sense of smell of these animals is truly exceptional and their capacity to give off different warning signal smells, by exuding various kinds of substances, must necessarily be taken into account in order to ensure the continuous trapping capacity of the device.

The air-tight sealing of the aforementioned container, achieved when the top section of the device is fitted on top of said container by means of a suitable joint. In this manner, the animals cannot spread any kind of warning signal smell to the other animals, neither inside or outside of the device, because the discharge door of the trapped animals is air-tight.

Furthermore, in order to prevent even the smallest escape of said warning signal smells inside the device, which could occur during the brief moment in which the discharge door opens, a hygienic, deodorizing, disinfecting and partially preservative liquid is mixed in the water placed in the aforementioned bottom container.

Further characteristics and advantages of the trap will be better understood by reading the description of the preferred, but not exclusive, model of this electromechanical device for the continuous trapping of such noxious animals such as rats and mice, making reference to the attached figures and drawings, in which:
- figure 1 shows an overall view of the various components of the device;
- figure 2 shows the devices mechanical and electromechanical components;
- figure 3 shows the basic electric circuit arrangement;
- figure 4 shows an outline of the centrally privoted swinging trapping area in operation and the electric contact which closes the circuit during the trapping phase.

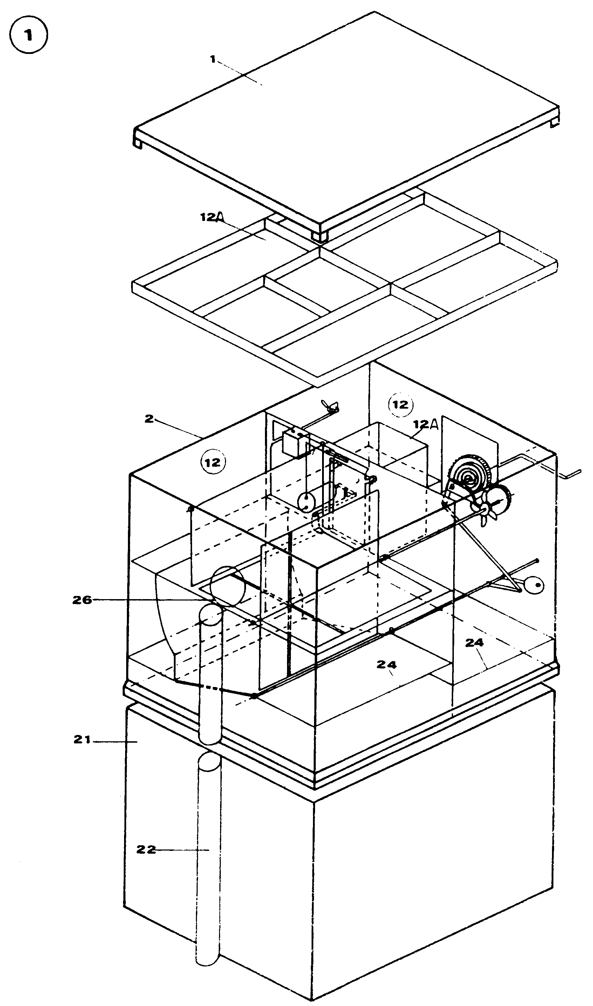

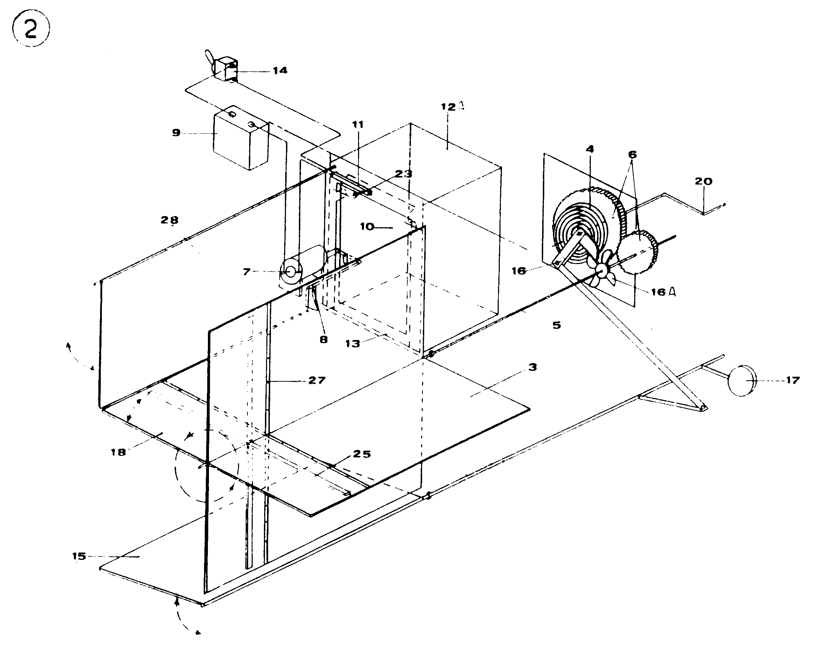

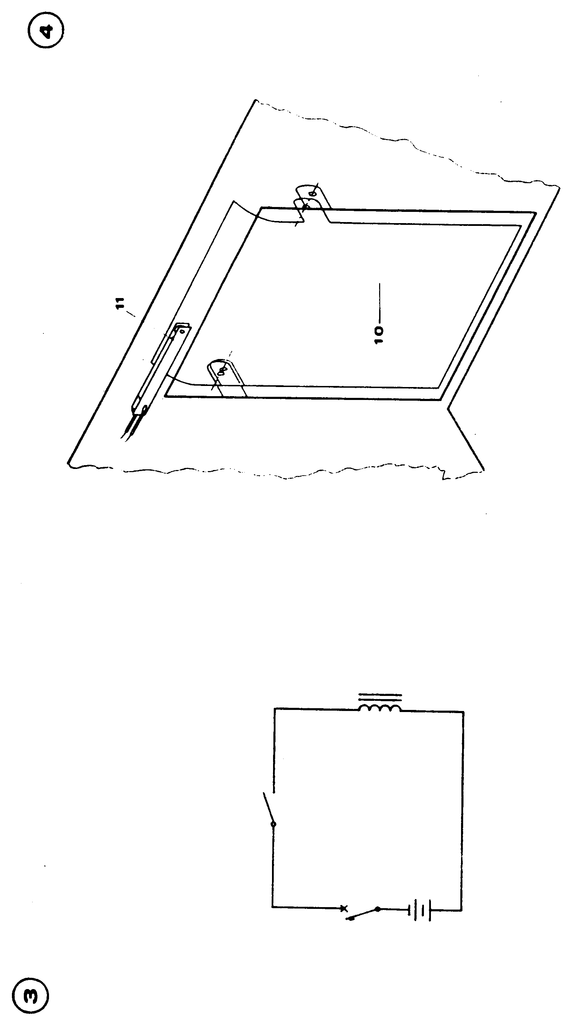

With special reference to the numbers shown in the foregoing figures, the device consists of two removable sections, fitted the one into the other, with different shapes and sizes, according to the kind of animals one wants to trap.

The top section 2(1) of the device is divided into compartments 12 housing the electrical mechanisms for the capture and the feed-containers 12A. This section has a removable lid, which fits on top and which may or may not be sloped and a floor 24(1), which hermetically seals the bottom section 21(1), when the former is fitted on top of it.

Said bottom section 21(1) is an air-tight container in which the trapped animals are collected.

The component elements of the device are as follows:
- four rectangular planes 3(2) placed at 90 degrees to each other, which rotate around a supporting axis 5(2) and in turn, during the rotation, occupy the horizontal position of rotating trapping area, close to the entrance door 26(1), on the one hand, and to the swinging trapping area 10(2)(4), the only access to the compartment containing the bait, on the other.

In order to trap some animals which do not like entering narrow holes or passage-ways provided with only one opening, the aforementioned rotating trapping areas must be as long as the entire device, so that the animal may see or feel an opening at the other end, through the emission of ultrasounds (as in the case of rats). In this case, the trapping mechanisms are placed on the sides of the device, while the sensitive trapping control mechanisms are placed half-way along the rotating trapping areas.

For trapping rats and similar vermin with long tails, the part of the rotating trapping areas close to the entrance door 26(1) is provided with an upwardly-mobile, hinged segment 18(2), in order to allow the animal's tail to slide easily during the animal's fall into the underlying container, even after the subsequent rotating trapping area has reached the horizontal trapping service position;
- said segment, during the rotation of the trapping areas, is kept close to the supporting wing 25(2) by means of a small return spring located in the middle of the segment's hinge 27(2); but also to prevent the jamming of the trapping areas' rotation, especially with regard to the rat-trapping model, because the space required for trapping the rats allows more than one rat to enter, one after the other. In this case, while the first rat triggers the trapping mechanism, the following rat has only partially entered the device and would be caught between the floor and the instantaneous arrival of the subsequent rotating trapping area, thus jamming the rotatory movement. By applying this upwardly-mobile segment, this inconvenience has been eliminated.

In order to avoid that these animals' tails also jam the rotating trapping areas during the trapping phase (only in the case of the rat-trapping model), the lower part of the container wall 28(2) has also been made outwardly-mobile.
- a spring 4(2) communicates the mechanical torque to the supporting axis 5(2), by means of two related gears 6(2). Said spring is capable of communicating a uniform torque for hundreds of consecutive trappings.
- a "sucking solenoid" 7(2), provided with a small pin 8(2) and turned on by the switch 14(2), for releasing the rotating trapping area during the trapping phase. The small pin 8(2) is provided with a return spring, which immediately repositions it in order to stop the subsequent trapping area. The releasing and blocking operations allow the 90 degree rotation of the trapping areas;
- a common battery 9(2) which supplies power for thousands of electric impulses to the sucking solenoid;
- an electrical contact 11(4)(2), which closes the battery-solenoid circuit during the trapping phase;
- a screw 23(2) for regulating the sensitivity of said contacts;
- a sensitive pivotable swinging trapping area 10(4), located in the compartment containing the bait, in such a manner so that the lower part partially hides the window-entrance 13(4)(2) to said compartment, while the top part of this swinging trapping area closes the electrical contact 11(4) as soon as the animal, in an attempt to poke its snout through the window-entrance, inevitably touches the lower part. Said swinging trapping area has proved exceptionally functional for trapping young mice and rats, so functional that they have been totally eliminated even in densely populated areas, but in the case of some older rats, in order to establish the contact, it has been necessary to place the swinging trapping area right on the edge of the bait container, giving it an adquate shape, besides making the rotating trapping areas as long as the entire device; in order to trap some animals provided with very sharp instincts, so sharp that they would sniff the bait but not touch it, to ensure the contact triggering the trapping mechanism in any case, it has been necessary to introduce an infallible system based on a photoelectric cell. In this way the animal sets off the trapping mechanism just be approaching the bait in order to smell it, something which, fortunately, it just can't resist doing;
- a service switch 14(2), two placed on the model with through trapping areas 14 and 14A(5) in order to manually turn the electric circuits which trigger the trapping mechanism on and off;
- a small winder 20(2) for loading the spring 4(2), similar to that used on old clocks;
- a small plank 22(1), divided into two segments, enabling the animal to easily climb up to the entrance 26(1);
- a "discharge" door 15(1) placed on the floor 24(1) of the top section 2(1) of the device, close to the service trapping area. This door has a 15 degree inclination and slides downwards: it is opened by means of a system of levers 16(2), controlled by cams 16A(2) placed on the supporting axis 5(2), and work synchronically with the rotating trapping areas, opening when the animal falls into the bottom container 21(2) and closing again, and hermetically sealing said container, by means of a counterweight 17(2).

The bottom air-tight container 21(1) is partially filled with water, to which a disinfectant may be added.

## Claims

1. An electromechanical device for the continuous capture of noxious animals, especially rats and mice, consisting of two superimposed sections, a bottom container (21) and a top section (2), this latter section being divided into compartments housing the trapping mechanism and the bait attracting the animals, besides another compartment the floor of which consists of rotating trapping areas (3) and the aim of which is to ensure that the animal, once it has entered the device in order to reach the bait, falls into the bottom container (21), separated from the top section (2) by the aforementioned rotating trapping areas (3), in which the animal is permanently trapped; each rotating trapping area (3) is provided, towards the entrance door (26), with an upwardly-mobile hinged segment (18), the aim of which is to prevent that parts of the animal's body may hinder the rotation of the trapping area (3) during the animal's fall and the positioning of the subsequent trapping area (3).

2. A device, as per claim 1, characterized by a pivotable swinging trapping area (10), which, when touched in the lower part closes a contact (11), by means of the top part, which triggers the trapping mechanism.

3. A device, as per one or more of the foregoing claims, characterized by the fact that the device comprises a discharge door (15) for the trapped animals, located on the floor (24) of the top section (2) of the device, the bottom container (21) being air-tight, in order to prevent the escape of any warning signal smells into the top section (2), which would effectively keep away any other animal.

4. A device, as per one or more of the foregoing claims, characterized by the fact that the device comprises only one or more than one rotating trapping areas, either a mechanical or electromechanical trapping control.

5. A device, as per one or more of the foregoing claims, characterized by the fact that the device comprises a set of rotating trapping areas, with a centralized electromechanical trapping control system, said trapping areas discharging the trapped animals into the underlying container (21), of sufficient capacity.

6. A device, as per one or more of the foregoing claims, characterized by the fact that the device comprises through trapping areas; i.e., as long as the device itself.

7. A device, as per one or more of the foregoing claims, characterized in that the lower portion of the container wall (28) is mobile towards the outside.

8. A device, as per one or more of the foregoing claims, characterized in that the contact (11) which triggers the trapping mechanism in the model provided with through trapping areas is in form of a photoelectric cell system.

## Patentansprüche

1. Eine elektromechanische Vorrichtung für den fortgesetzten Fang von schädlichen Tieren, insbesondere Ratten und Mäuse, bestehend aus zwei übereinanderliegenden Abschnitten, einem unteren Behälter (21) und einem Oberteil (2), wobei letzterer Abschnitt in zwei Abteilungen unterteilt ist, in denen der Fangmechanismus und der Köder zum Anlocken der Tiere untergebracht sind; hinzu kommt eine weitere Abteilung, dessen Boden aus drehenden Fangebenen (3) besteht, deren Ziel es ist, sicherzustellen, dass das Tier nach Betreten der Vorrichtung zum Erreichen des Köders in den unteren Behälter (21) fällt, der von dem Oberteil (2) durch die vorstehend erwähnten rotierenden Fangebenen (3) getrennt ist, in denen das Tier ständig gefangen ist; jede rotierende Fangebene (3) ist in Richtung der Eingangstür (26) mit einem nach oben beweglichen, mit Angel versehenen Abschnitt (18) versehen, dessen Ziel es ist, zu verhindern, dass Teile des Tierkörpers die Drehbewegung der Fangebene (3) während dem Fall des Tieres und der Positionierung der anschliessenden Fangebene (3) behindern.

2. Eine Vorrichtung gemäss Anspruch 1, gekennzeichnet durch eine anlenkbare schwingende Fangebene (10), die bei Berührung ihres Unterteils mit Hilfe des Oberteils einen Kontakt schliesst, der den Fangmechanismus auslöst.

3. Eine Vorrichtung gemäss einem oder mehreren der vorstehenden Ansprüche , dadurch gekennzeichnet, dass die Vorrichtung eine Entsorgungstür (15) für die gefangenen Tiere umfasst, die sich am Boden (24) des Oberteils (2) der Vorrichtung befindet, wobei der untere Behälter (21) luftdicht ist, um das Austreten von Warngerüchen in die obere Abteilung (2) zu verhindern, was wirksam alle anderen Tiere fernhalten würde.

4. Eine Vorrichtung gemäss einem oder mehreren der vorstehenden Ansprüche , dadurch gekennzeichnet, dass die Vorrichtung nur eine oder mehr als eine Fangebenen enthält, wobei der Fangvorgang mechanisch oder elektromechanisch kontrolliert wird.

5. Eine Vorrichtung gemäss einem oder mehreren der vorstehenden Ansprüche , dadurch gekennzeichnet, dass die Vorrichtung eine Reihe rotierender Fangebenen mit einem zentralisierten elektromechanischen Fangkontrollsystem umfasst, wobei die besagten Fangebenen die gefangenen Tiere in den darunter liegenden Behälter (21) mit ausreichender Kapazität abgeben.

6. Eine Vorrichtung gemäss einem oder mehreren der vorstehenden Ansprüche, dadurch gekennzeichnet, dass die Vorrichtung durchgehende Fangebenen umfasst, zum Beispiel in der gleichen Länge wie die Vorrichtung selbst.

7. Eine Vorrichtung gemäss einem oder mehreren der vorstehenden Ansprüche, dadurch gekennzeichnet, dass der untere Abschnitt der Behälterwand (28) nach aussen beweglich ist.

8. Eine Vorrichtung gemäss einem oder mehreren der vorstehenden Ansprüche, dadurch gekennzeichnet, dass der den Fangmechanismus auslösende Kontakt (11) bei dem mit durchgehenden Fangebenen versehenen Modell in Form einer fotoelektrischen Zelle ausgestaltet ist.

## Revendications

1. Un dispositif électromécanique pour la capture continuelle d'animaux nusibles, en particulier les rats et les souris, consistant en deux sections superposées, un réservoir de fond (21) et une section supérieure (2), cette dernière étant divisée en compartiments qui contiennenet le mécanisme de piégeage et l'appât pour attirer les animaux, outre un autre compartiment dont le plancher consiste en zones de captures tournantes (3) et qui a pour fonction d'assurer que l'animal, une fois qu'il est entré dans le dispositif pour atteindre l'appât, tombe dans le réservoir du fond (21), séparé de la section supérieure (2) par les zones de capture tournantes (3) susmentionnées, dans lesquelles l'animal est définitivement piégé: chaque zone de capture tournante (3) est munie, vers la porte d'entrée (26), d'un segment articulé mobile vers le haut (18), qui sert à empêcher que des parties du corps de l'animal puissent entraver la rotation de la zone de capture (3) pendant la chute de l'animal, et la mise en place de la zone de capture (3) suivante.

2. Un dispositif, conformément à la revendication 1, caractérisé par une zone de capture oscillante pivotante (10) qui, lorsqu'elle est touchée à la partie inférieure, ferme un contact (11), au moyen de la partie supérieure, qui déclenche le mécanisme de piégeage.

3. Un dispositif, conformément à une ou plus des revendications précédentes, caractérisé par le fait que le dispositif comprend une porte de déchargement (15) des animaux piégés, placée sur le plancher (24) de la section supérieure (2) du dispositif, le réservoir du fond (21) étant étanche, de façon à empêcher l'émission de toutes les odeurs avertissant du danger dans la section supérieure (2), qui écarterait les autres animaux.

4. Un dispositif, conformément à une ou plus des revendications précédentes, caractérisé par le fait que le dispositif comprend seulement une ou plus d'une zone de capture tournante, avec une commande de piégeage mécanique ou électromécanique.

5. Un dispositif, conformément à une ou plus des revendications précédentes, caractérisé par le fait que le dispositif comprend une série de zones de capture tournantes, avec un système de contrôle du piégeage électromécanique centralisé, ces zones de capture déchargeant les animaux piégés dans un réservoir sous-jacent (21), d'une capacité appropriée.

6. Un dispositi, conformément à une ou plus des revendications précédentes, caractérisé par le fait que le dispositif comprend des zones de capture passantes, c'est-à-dire aussi longues que le dispositif même.

7. Un dispositif, conformément à une ou plus des revendications précédentes, caractérisé par le fait que la partie inférieure du mur du récipient (28) est mobile vers l'extérieur.

8. Un dispositif, conformément à une ou plus des revendications précédentes, caractérisé par le fait que le contact (11) qui déclenche le mécanisme de piégeage, dans le modèle fourni avec des zones de capture passantes, se présentte comme un système de cellule photoélectrique.
